# EUROPEAN PATENT SPECIFICATION

(11) **EP 3 305 559 B1**
(45) Date of publication and mention of the grant of the patent: **04.09.2019**
(21) Application number: 16192306.5
(22) Date of filing: 05.10.2016
(51) Int. Cl.: B60C 11/13, B60C 11/00

(54) **TIRE**
REIFEN
PNEU

(43) Date of publication of application: 11.04.2018
(73) Proprietor: Kenda Rubber Ind. Co., Ltd., 510 Yuanlin Township (TW)
(72) Inventor: YANG, Ying-Ming, 510 Yuanlin Township, Changhua County (TW); CHIU, Wen-Fu, 510 Yuanlin Township, Changhua County (TW)
(74) Representative: Viering, Jentschura & Partner mbB Patent- und Rechtsanwälte

(56) References cited:
- EP-A1- 2 067 636
- EP-A1- 2 960 079
- WO-A1-2015/064248
- JP-A- 2012 116 410
- US-A1- 2011 061 780
- US-A1- 2013 240 101
- US-A1- 2014 283 965
- US-A1- 2016 280 011
- US-A1- 2016 280 012

## Description

### BACKGROUND OF THE INVENTION

### 1. Technical Field

The present invention relates to a tire, and more particularly to a tire having good drainage performance.

### 2. Description of Related Art

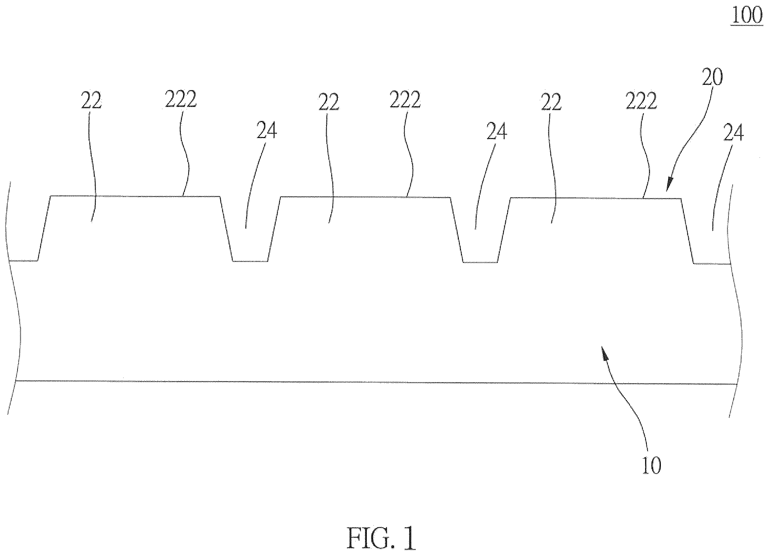

Part of a conventional tire 100 is illustrated in FIG. 1, including a body 10 and a tread 20 engaged with an outer side of the body 10. The tread 20 has a plurality of blocks 22 thereon, wherein the blocks 22 are provided along an outer circumferential surface of the tire 100 to form multiple parallel circles of blocks, each of which has two grooves 24 formed on two lateral sides thereof. Each block 22 has an outer surface 222 adapted to contact the road surface. The outer surface 222 is flat in a transverse direction (i.e., the width direction) of the tire 100. When the tire 100 is rolling on the ground, the outer surface 222 would abut against the ground. When the tire 100 is rolling on a wet ground, the water on the ground would be squeezed into the grooves 24 by the outer surfaces 222 of the blocks 22, whereby to maintain a certain grip.

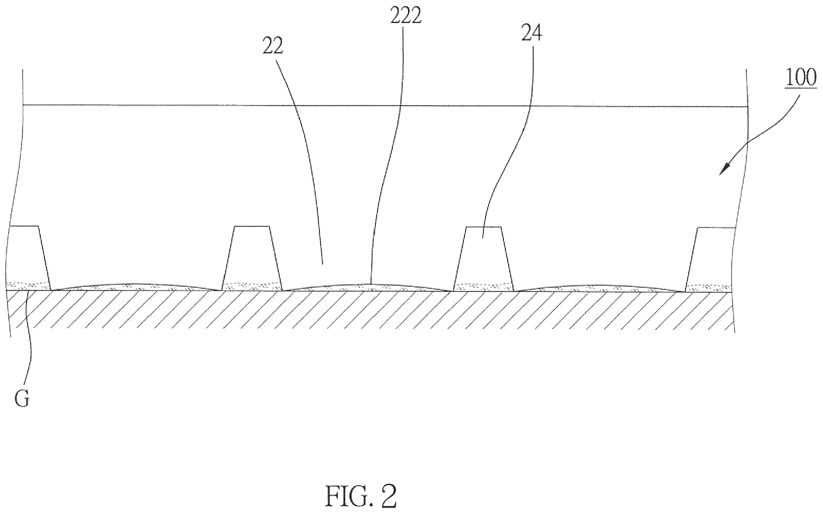

However, the outer surfaces 222 of the blocks 22 of the tire 100 would gradually become worn with age, causing the outer surfaces 222 to recess inward (as shown in FIG. 2). Once recessed, the contact area between the outer surfaces 222 of the blocks 22 and the ground would be reduced, making the grip of the tire 100 worse. In addition, when the worn tire 100 rolls on the wet ground, the water could not be smoothly squeezed into the grooves 24 and dissipated; instead, the water would be confined in the recessed portions on the outer surfaces 222, causing hydroplaning. In all aspects, such a conventional tire still has room for improvements. Document EP2067636 A1 discloses a tire on which the preamble of claim 1 is based.

### BRIEF SUMMARY OF THE INVENTION

In view of the above, the primary objective of the present invention is to provide a tire, which provides good drainage performance and long service life.

To achieve the objective of the present invention, the present invention provides a tire according to claim 1. Said tire includes a body and a tread engaged with the body. The tread includes a plurality of blocks and at least two grooves. The blocks and the at least two grooves are respectively provided along an outer circumferential surface of the tire. Each of the blocks are located between two of the at least two grooves. Each of the blocks has an outer surface bulging outward, wherein the outer surface is a part of the tire that contacts a ground. Each of the blocks has two lateral walls in a transverse direction of the tire. Each of the lateral walls has a flat segment, wherein a surface of each of the flat segments is flat. An extension line is defined along the surface of each of the flat segments in a vertical cross section of each of the blocks, wherein the extension line extends from a bottom of the belonged block toward the outer surface, and a first point is defined at where the extension line leaves the relevant surface. Each extension line has no contact with the belonged block after passing the first point. A first horizontal reference line is defined by connecting the two first points of each of the blocks. A second horizontal reference line and a vertical reference line are defined on the outer surface of each of the blocks, wherein the second horizontal reference line is parallel to the first horizontal reference line, and two ends of the second horizontal reference line contact the relevant outer surface at two second points. A length of the second horizontal reference line is 0.85 times a length of the first horizontal reference line. The vertical reference line is perpendicular both to the first horizontal reference line and the second horizontal reference line, passing through a center of the first horizontal reference line and a center of the second horizontal reference line, wherein a vertical distance is defined between the center of the second horizontal reference line and an intersection of the vertical reference line and the outer surface. The vertical distance is between 0.2 mm and 0.8 mm.

With the outward bulging blocks having the vertical distance of 0.2-0.8 mm, the tire could still maintain good contact with the ground even if the outer surfaces of the blocks are worn. Therefore, the tire could provide good drainage performance and adequate grip. Furthermore, such design could extend the service life of the tire, and enhance security while using the tire.

### BRIEF DESCRIPTION OF THE SEVERAL VIEWS OF THE DRAWINGS

The present invention will be best understood by referring to the following detailed description of some illustrative embodiments in conjunction with the accompanying drawings, in which
FIG. 1 is a schematic diagram, showing part of a conventional tire;
FIG. 2 is a schematic diagram, showing the situation when a worn conventional tire rolls on the wet ground;
FIG. 3 is a schematic diagram, showing part of the tire of a first embodiment of the present invention;
FIG. 4 is a schematic diagram, showing the first blocks of the tire of the first embodiment;
FIG. 5 is a schematic diagram, showing the situation that the tire of the first embodiment rolls on the wet ground when it gets worn; and
FIG. 6 is a schematic diagram, showing the blocks of a second embodiment of the present invention.

### DETAILED DESCRIPTION OF THE INVENTION

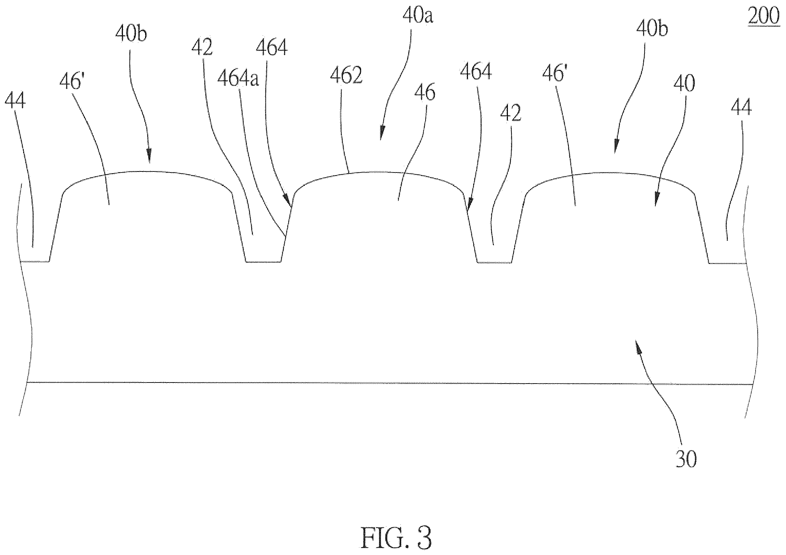

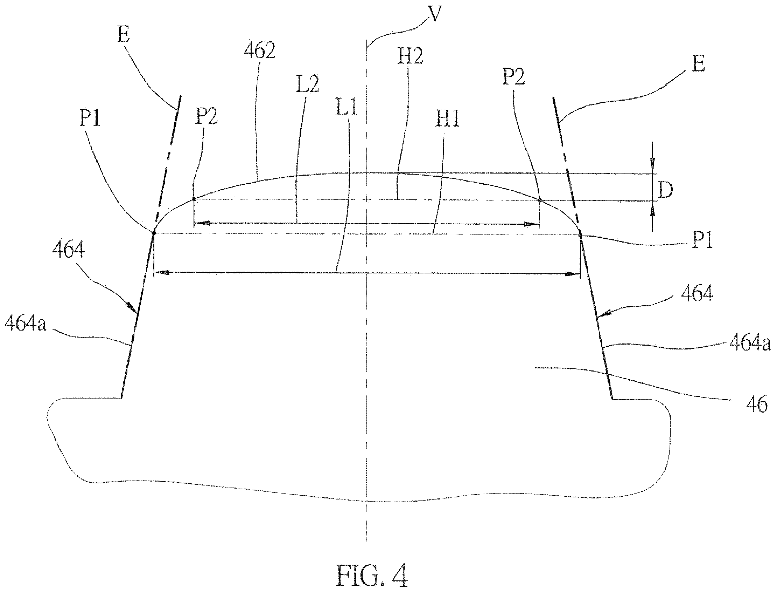

A tire 200 of a first embodiment of the present invention is illustrated in FIG. 3 and FIG. 4, showing a part of the tire 200, wherein the tire 200 includes a body 30 and a tread 40 engaged with outer sides of the body 30. The essence of the present invention is on a structure of the tread 40.

The tread 40 includes a plurality of blocks and four grooves. The blocks and the four grooves are respectively provided along an outer circumferential surface of the tire 200, wherein each of the blocks is located between two of the four grooves, and the blocks form at least one full circle of blocks. More specifically, the four grooves include two first grooves 42 and two second grooves 44. The tread 40 includes a middle portion 40a and two lateral portions 40b located on two lateral sides of the middle portion 40a, wherein the middle portion 40a is located between the first grooves 42, and each of the lateral portions 40b is located between one of the first grooves 42 and one of the second grooves 44. The blocks include a plurality of first blocks 46 and a plurality of second blocks 46', wherein the first blocks 46 are located on the middle portion 40a, and are arranged along the outer circumferential surface of the tire 200 in a full circle, while the second blocks 46' are respectively located on the lateral portions 40b, and the second blocks 46' on each of the lateral portions 40b are arranged along the outer circumferential surface of the tire 200 to respectively arranged in a full circle. In practice, the middle portion 40a could have two circles of the first blocks 46 arranged thereon, with a central groove formed between said two circles of the first blocks 46.

In order to illustrate easily, we take one of the first blocks 46 for explanation herein. A structure of said block 46 shown in FIG. 4 is in the condition when the tire 200 is unfilled.

The first block 46 has an outer surface 462 bulging outward, wherein the outer surface 462 is the part of the tire 200 that contacts the road surface. In the first embodiment, the outer surface 462 is a curved surface. The first block 46 has two lateral walls 464 in a transverse direction (i.e., a width direction) of the tire 200. Each of the lateral walls 464 has a flat segment 464a, wherein a surface of each of the flat segment 464a is flat, and each of the flat segments 464a is the longest segment of the belonged lateral wall 464. In a vertical cross section of the first block 46, an extension line E is defined along the surface of each of the flat segments 464a, extending from a bottom of the first block 46 toward the outer surface 462, wherein the point where the extension line E leaves the physical surface is defined as a first point P1. Each extension line E has no contact with the first block 46 after passing the first point P1. In other words, for each of the flat segments 464a, the first point P1 thereon is the closest point to the outer surface 462. By lining two first points P1 on the flat segments 464a, a first horizontal reference line H1 could be determined.

In order to define a degree of bulging of the outer surface 462 more accurately, a second horizontal reference line H2 and a vertical reference line V are further defined on the outer surface 462. The second horizontal reference line H2 is parallel to the first horizontal reference line HI, with two ends thereof respectively contacting the outer surface 462 at two second points P2 in the vertical cross section of the first block 46. A length of the second horizontal reference line H2 is 0.85 times a length of the first horizontal reference line H1. The vertical reference line V is perpendicular both to the first horizontal reference line H1 and the second horizontal reference line H2, passing through a center of the first horizontal reference line H1 and a center of the second horizontal reference line H2. The vertical reference line V is parallel to a radial direction of the tire 200. Whereby, a vertical distance D between a point of intersection of the vertical reference line V and the outer surface 462 and the center of the second horizontal reference line H2 could be defined. In the first embodiment, the first block 46 is symmetrical, which are centered on the vertical reference line V. However, this is not a limitation of the present invention. In other embodiments, the first blocks 46 could be also non-symmetrical on two sides of the vertical reference line V.

In the first embodiment, each of the second blocks 46' has the same structure with said first block 46. Thus we are not going to describe it in details herein. By experiments, the vertical distance D of the first block 46 (and each of the second blocks 46') is found optimal when between 0.2 mm and 0.8 mm, for the tire 200 could offer good drainage performance and adequate grip.

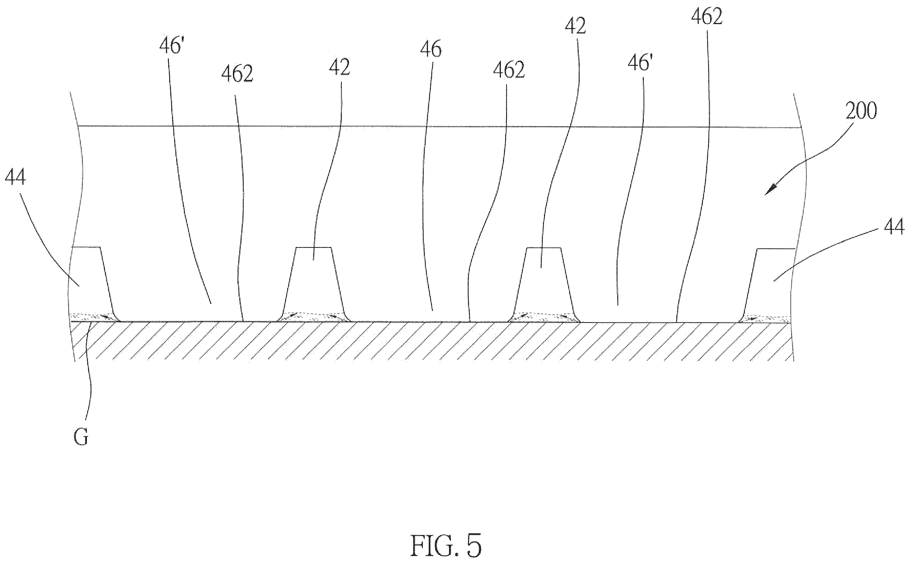

The tire 200 shown in FIG. 5 is filled and rolling on a ground G, wherein the outer surfaces 462 of the first blocks 46 and the second blocks 46' could still maintain good contact with the ground G even if the outer surfaces 462 bulging from the first blocks 46 and the second blocks 46' are becoming flat due to wear and tear. Whereby, when the tire 200 rolls on the wet ground G, the water of the ground G could be squeeze in the first grooves 42 and the second grooves 44 through the outer surface 462 of each of the first blocks 46 and each of the second blocks 46', whereby to provide good drainage performance.

In addition, due to the maximum vertical distance D is 0.8 mm, even when the tire 200 is loaded, and the first blocks 46 and the second blocks 46's are therefore under pressure, each of the first blocks 46 and each of the second blocks 46' could still maintain good contact with the ground G, whereby to offer good grip. Furthermore, in consideration of the endurance of the tire 200, the vertical distance D would be preferred to be greater than or equal to 0.2 mm. Therefore, preferably, a numerical range of the vertical distance D would be between 0.2 mm and 0.8 mm.

Said vertical distance D of each of the first blocks 46 is equal to the vertical distance D of each of the second blocks 46' According to the present invention the vertical distance D of each of the first blocks 46 is greater than that of each of the second blocks 46', since the middle portion 40a of the tread 40 is worn more easily than the lateral portions 40b.
Therefore, by further bulging the outer surface 462 of each of the first blocks 46 on the middle portion 40a to a greater degree than that of the outer surface 462 of each of the second blocks 46' on the lateral portions 40b, a service life of the tire 200 can be extended . According to the invention the vertical distance D of each of the first blocks 46 located on the middle portion 40a would be between 0.5 mm and 0.8mm, and the vertical distance D of each of the second blocks 46' located on each of the lateral portions 40b is smaller than 0.5 mm, but greater than or equal to 0.2 mm.

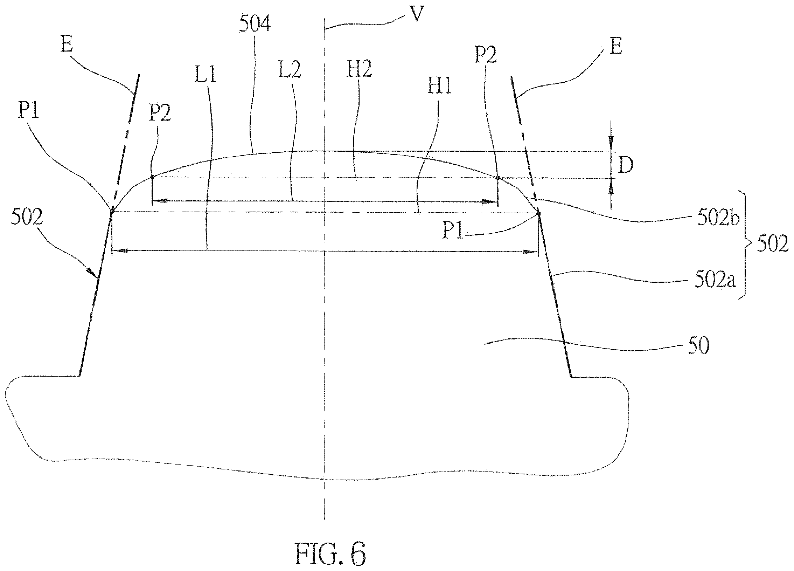

Blocks 50 of a tire of a second embodiment of the present invention is illustrated in FIG. 6, each of which has almost the same structure as described in the first embodiment, wherein the difference between the first and the second embodiments is that, each lateral wall 502 of each of the blocks 50 has a flat segment 502a and a chamfered segment 502b, wherein the chamfered segment 502b is located between the flat segment 502a and an outer surface 504. Each flat segment 502a is the longest segment on each of the lateral walls 502. In the second embodiment, the first point P1 where the extension line E leaves each of the flat segments 502a is located at the junction between the relevant flat segment 502a and the adjacent chamfered segment 502b. The definitions of the first horizontal reference line HI, the second horizontal reference line H2, the second points P2, the vertical reference line V, and the vertical distance D are all the same as described in the first embodiment, which we are not going to discuss in more details herein.

In conclusion, with the outward bulging blocks having the vertical distance of 0.2-0.8 mm, the outer surfaces of the blocks of the tire could maintain good contact with the ground to provide good drainage performance and adequate grip. Furthermore, such design could extend the service life of the tire, and enhance high security while using the tire.

## Claims

1. A tire (200), comprising:
a body (30) and a tread (40) engaged with the body (30), wherein the tread (40) comprises a plurality of blocks (46, 46', 50) and at least two grooves (42, 44); the blocks (46, 46', 50) and the at least two grooves (42, 44) are respectively provided along an outer circumferential surface of the tire (200); each of the blocks (46, 46', 50) are located between two of the at least two grooves (42, 44); each of the blocks (46, 46', 50) has an outer surface (504) bulging outward; the outer surface (504) is a part of the tire (200) that contacts a ground; each of the blocks (46, 46', 50) has two lateral walls (464) in a transverse direction of the tire (200); each of the lateral walls (464, 502) has a flat segment (464a, 502a), wherein a surface of each of the flat segments (464a, 502a) is flat; an extension line (E) is defined along the surface of each of the flat segments (464a, 502a) in a vertical cross section of each of the blocks (46, 46', 50), wherein the extension line (E) extends from a bottom of the belonged block (46, 46', 50) toward the outer surface (504), and a first point (P1) is defined at where the extension line (E) leaves the relevant surface; each extension line (E) has no contact with the belonged block (46, 46', 50) after passing the first point (PI); a first horizontal reference line (H1) is defined by connecting the two first points (P1) of each of the blocks (46, 46', 50); a second horizontal reference line (H2) and a vertical reference line (V) are defined on the outer surface (504) of each of the blocks (46, 46', 50), wherein the second horizontal reference line (H2) is parallel to the first horizontal reference line (H1), and two ends of the second horizontal reference line (H2) contact the relevant outer surface (504) at two second points (P2); a length (L2) of the second horizontal reference line (H2) is 0.85 times a length (L1) of the first horizontal reference line (H1); the vertical reference line (V) is perpendicular both to the first horizontal reference line (H1) and the second horizontal reference line (H2), passing through a center of the first horizontal reference line (H1) and a center of the second horizontal reference line (H2);
wherein, a vertical distance (D) is defined between the center of the second horizontal reference line (H2) and an intersection of the vertical reference line (V) and the outer surface (504),
the at least two grooves (42, 44) comprise at least four grooves (42, 44), including two first grooves (42) and two second grooves (44); the tread (40) comprises a middle portion (40a) and two lateral portions (40b) located on two lateral sides of the middle portion (40a); the middle portion (40a) is located between the first grooves (42), and each of the lateral portions (40b) is located between one of the first grooves (42) and one of the second grooves (44); the blocks (46, 46') comprise a plurality of first blocks (46) and a plurality of second blocks (46'), the second blocks (46') are respectively located on the lateral portions (40b) and the vertical distance (D) of each of the first blocks is greater than the vertical distance (D) of each of the second blocks (46'); **characterized in that**
the vertical distance (D) is between 0.2 mm and 0.8 mm; the first blocks (46) are located on the middle portion (40a); the vertical distance (D) of each of the first blocks (46) is between 0.5 mm and 0.8 mm, and the vertical distance (D) of each of the second blocks (46') is smaller than 0.5 mm.

2. The tire (200) of claim 1, wherein the outer surface (504) of each of the blocks (46, 46', 50) is curved.

3. The tire (200) of claim 1, wherein each of the blocks (46, 46', 50) is symmetrical on two sides of the vertical reference line (V).

4. The tire (200) of claim 1, wherein the vertical reference line (V) is parallel to a radial direction of the tire (200).

## Patentansprüche

1. Ein Reifen (200), umfassend:
einen Körper (30) und eine Lauffläche (40), die mit dem Körper (30) in Eingriff ist, wobei die Lauffläche (40) eine Mehrzahl von Blöcken (46, 46', 50) und mindestens zwei Rillen (42, 44) umfasst; die Blöcke (46, 46', 50) und die mindestens zwei Rillen (42, 44) jeweils entlang einer Außenumfangsfläche des Reifens (200) vorgesehen sind; jeder der Blöcke (46, 46', 50) zwischen zwei der mindestens zwei Rillen (42, 44) angeordnet ist; jeder der Blöcke (46, 46', 50) eine Außenfläche (504) hat, die sich nach außen wölbt; die Außenfläche (504) ein Teil des Reifens (200) ist, der einen Boden kontaktiert; jeder der Blöcke (46, 46', 50) in einer Querrichtung des Reifens (200) zwei Seitenwände (464) hat; jede der Seitenwände (464, 502) ein flaches Segment (464a, 502a) umfasst, wobei eine Oberfläche jedes der flachen Segmente (464a, 502a) flach ist; eine Verlängerungslinie (E) entlang der Oberfläche von jedem der flachen Segmente (464a, 502a) in einem vertikalen Querschnitt von jedem der Blöcke (46, 46', 50) definiert ist, wobei sich die Verlängerungslinie (E) von einem Boden des zugehörigen Blocks (46, 46', 50) in Richtung zu der Außenfläche (504) erstreckt und ein erster Punkt (Pl) dort definiert ist, wo die Verlängerungslinie (E) die entsprechende Oberfläche verlässt; jede Verlängerungslinie (E) keinen Kontakt mit dem zugehörigen Block (46, 46', 50) hat, nachdem sie den ersten Punkt (Pl) passiert hat; eine erste horizontale Referenzlinie (Hl) durch Verbinden der beiden ersten Punkte (Pl) von jedem der Blöcke (46, 46', 50) definiert ist; eine zweite horizontale Referenzlinie (H2) und eine vertikale Referenzlinie (V) an der Außenfläche (504) von jedem der Blöcke (46, 46', 50) definiert sind, wobei die zweite horizontale Referenzlinie (H2) parallel zu der ersten horizontalen Referenzlinie (Hl) ist und zwei Enden der zweiten horizontalen Referenzlinie (H2) die jeweilige Außenfläche (504) an zwei zweiten Punkten (P2) kontaktieren; eine Länge (L2) der zweiten horizontalen Referenzlinie (H2) das 0,85-Fache einer Länge (L1) der ersten horizontalen Referenzlinie (H1) ist; die vertikale Referenzlinie (V) sowohl zu der ersten horizontalen Referenzlinie (H1) als auch zu der zweiten horizontalen Referenzlinie (H2) senkrecht ist, wobei sie durch eine Mitte der ersten horizontalen Referenzlinie (H1) und eine Mitte der zweiten horizontalen Referenzlinie (H2) verläuft;
wobei ein vertikaler Abstand (D) zwischen der Mitte der zweiten horizontalen Referenzlinie (H2) und einem Schnittbereich der vertikalen Referenzlinie (V) und der Außenfläche (504) definiert ist,
die mindestens zwei Rillen (42, 44) mindestens vier Rillen (42, 44) umfassen, die zwei erste Rillen (42) und zwei zweite Rillen (44) umfassen; die Lauffläche (40) einen mittleren Abschnitt (40a) und zwei seitliche Abschnitte (40b) umfasst, die auf zwei seitlichen Seiten des mittleren Abschnitts (40a) angeordnet sind; der mittlere Abschnitt (40a) zwischen den ersten Rillen (42) angeordnet ist und jeder der seitlichen Abschnitte (40b) zwischen einer der ersten Rillen (42) und einer der zweiten Rillen (44) angeordnet ist; die Blöcke (46, 46') eine Mehrzahl von ersten Blöcken (46) und eine Mehrzahl von zweiten Blöcken (46') umfassen, die zweiten Blöcke (46') jeweils auf den seitlichen Abschnitten (40b) angeordnet sind und der vertikale Abstand (D) von jedem der ersten Blöcke größer als der vertikale Abstand (D) von jedem der zweiten Blöcke (46') ist; **dadurch gekennzeichnet, dass**
der vertikale Abstand (D) zwischen 0,2 mm und 0,8 mm beträgt; die ersten Blöcke (46) auf dem mittleren Abschnitt (40a) angeordnet sind; der vertikale Abstand (D) von jedem der ersten Blöcke (46) zwischen 0,5 mm und 0,8 mm beträgt und der vertikale Abstand (D) von jedem der zweiten Blöcke (46') kleiner als 0,5 mm ist.

2. Der Reifen (200) nach Anspruch 1, wobei die Außenfläche (504) von jedem der Blöcke (46, 46', 50) gekrümmt ist.

3. Der Reifen (200) nach Anspruch 1, wobei jeder der Blöcke (46, 46', 50) auf zwei Seiten der vertikalen Referenzlinie (V) symmetrisch ist.

4. Der Reifen (200) nach Anspruch 1, wobei die vertikale Referenzlinie (V) parallel zu einer radialen Richtung des Reifens (200) ist.

## Revendications

1. Pneu (200), comprenant :
une carcasse (30) et une bande de roulement (40) en prise avec la carcasse (30), dans lequel la bande de roulement (40) comprend une pluralité de blocs (46, 46', 50) et au moins deux rainures (42, 44) ; les blocs (46, 46', 50) et les au moins deux rainures (42, 44) sont respectivement disposés le long d'une surface circonférentielle extérieure du pneu (200) ;
chacun des blocs (46, 46', 50) est situé entre deux des au moins deux rainures (42, 44) ;
chacun des blocs (46, 46', 50) a une surface extérieure (504) faisant saillie vers l'extérieur ;
la surface extérieure (504) est une partie du pneu (200) qui est en contact avec un sol ;
chacun des blocs (46, 46', 50) a deux parois latérales (464) dans une direction transversale du pneu (200) ; chacune des parois latérales (464, 502) a un segment plat (464a, 502a),
dans lequel une surface de chacun des segments plats (464a, 502a) est plate : une ligne de prolongement (E) est définie le long de la surface de chacun des segments plats (464a, 502a) dans une section transversale verticale de chacun des blocs (46, 46', 50), dans lequel la ligne de prolongement (E) s'étend à partir d'un fond du bloc (46, 46', 50) associé vers la surface extérieure (504), et un premier point (P1) est défini au niveau duquel la ligne de prolongement (E) quitte la surface correspondante ; chaque ligne de prolongement (E) est sans contact avec le bloc (46, 46', 50) associé après avoir franchi le premier point (P1) ;
une première ligne de référence horizontale (H1) est définie en reliant les deux premiers points (P1) de chacun des blocs (46, 46', 50) ; une deuxième ligne de référence horizontale (H2) et une ligne de référence verticale (V) sont définies sur la surface extérieure (504) de chacun des blocs (46, 46', 50), dans lequel la deuxième ligne de référence horizontale (H2) est parallèle à la première ligne de référence horizontale (H1), et deux extrémités de la deuxième ligne de référence horizontale (H2) sont en contact avec la surface extérieure (504) correspondante au niveau de deux deuxièmes points (P2) ; une longueur (L2) de la deuxième ligne de référence horizontale (H2) est égale à 0,85 fois une longueur (L1) de la première ligne de référence horizontale (H1); la ligne de référence verticale (V) est perpendiculaire à la fois à la première ligne de référence horizontale (H1) et à la deuxième ligne de référence horizontale (H2), passant à travers un centre de la première ligne de référence horizontale (H1) et un centre de la deuxième ligne de référence horizontale (H2) ;
dans lequel une distance verticale (D) est définie entre le centre de la deuxième ligne de référence horizontale (H2) et une intersection de la ligne de référence verticale (V) et de la surface extérieure (504),
les au moins deux rainures (42, 44) comprennent au moins quatre rainures (42, 44), incluant deux premières rainures (42) et deux deuxièmes rainures (44) ; la bande de roulement (40) comprend une portion centrale (40a) et deux portions latérales (40b) situées sur deux côtés latéraux de la portion centrale (40a) ; la portion centrale (40a) est située entre les premières rainures (42), et chacune des portions latérales (40b) est située entre l'une des premières rainures (42) et l'une des deuxièmes rainures (44) ; les blocs (46, 46') comprennent une pluralité de premiers blocs (46) et une pluralité de deuxièmes blocs (46'), les deuxièmes blocs (46') sont respectivement situés sur les portions latérales (40b), et la distance verticale (D) de chacun des premiers blocs est plus grande que la distance verticale (D) de chacun des deuxièmes blocs (46') ; **caractérisé en ce que**
la distance verticale (D) est comprise entre 0,2 mm et 0,8 mm ;
les premiers blocs (46) sont situés sur la portion centrale (40a) ;
la distance verticale (D) de chacun des premiers blocs (46) est comprise entre 0,5 mm et 0,8 mm, et la distance verticale (D) de chacun des deuxièmes blocs (46') est inférieure à 0,5 mm.

2. Pneu (200) selon la revendication 1, dans lequel la surface extérieure (504) de chacun des blocs (46, 46', 50) est incurvée.

3. Pneu (200) selon la revendication 1, dans lequel chacun des blocs (46, 46', 50) est symétrique sur deux côtés de la ligne de référence verticale (V).

4. Pneu (200) selon la revendication 1, dans lequel la ligne de référence verticale (V) est parallèle à une direction radiale du pneu (200).
